Europäisches Patentamt

European Patent Office

Office européen des brevets

(11) Publication number: **0 374 843**

**A2**

# EUROPEAN PATENT APPLICATION

(21) Application number: **89123471.8**

(51) Int. Cl.5 **H04J 3/06**

(22) Date of filing: **19.12.89**

(30) Priority: **19.12.88 JP 318385/88**

(43) Date of publication of application:
**27.06.90 Bulletin 90/26**

(84) Designated Contracting States:
**DE GB SE**

(71) Applicant: **FUJITSU LIMITED**
**1015, Kamikodanaka Nakahara-ku**
**Kawasaki-shi Kanagawa 211(JP)**

(72) Inventor: **Murayama, Masami**
**39-6, Umegaoka Midori-ku**
**Yokohama-shi Kanagawa 227(JP)**
Inventor: **Nara, Takashi**
**137-19, Hatsunegaoka Hodogaya-ku**
**Yokohama-shi Kanagawa 240(JP)**
Inventor: **Kato, Yoshiharu**
**14-9, Ogikubo 2-chome Suginami-ku**
**Tokyo 167(JP)**
Inventor: **Sakai, Masataka**
**20-5, Kakinokidai Midori-ku**
**Yokohama-shi Kanagawa 227(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **A bit phase difference absorbing apparatus.**

(57) The bit phase difference recognizing unit (91) is provided within a master apparatus (1¹) and recognizes a bit phase difference of respective data corresponding to respective slave apparatuses (2a,2b). A bit phase difference correcting unit (92) provided within the master apparatus (1¹) corrects the bit phase difference of respective data in processing respective data corresponding to respective slave apparatuses (2a,2b) based on the recognition result obtained by the bit phase difference recognizing unit (91). For example, when a master apparatus of an electronic exchange apparatus performs an exchange connection process, the bit phase difference is directly corrected. Therefore, a special buffer for correcting the bit phase difference is not necessary and the present invention can be flexibly adapted for the case where the bit phase difference changes.

Fig 7

## A Bit Phase Difference Absorbing Apparatus

Background of the invention

The present invention relates to an apparatus for absorbing a bit phase difference between slave apparatuses where a plurality of slave apparatuses are connected to a master apparatus, for example, where various apparatuses are connected to a digital switching module of a digital exchange.

Description of the Related Art

Where a plurality of slave apparatuses are connected to a master apparatus, for example, where various kinds of terminal apparatuses and remote concentrator apparatuses are connected to a digital switching module of a digital exchange, data transmission and reception is required to be conducted between the master apparatus and respective slave apparatuses. If data transmission from slave apparatuses to the master apparatus is conducted under control of respective slave apparatuses, the phases of the data train received from respective slave apparatuses by the master apparatus are generally different. Even if data are transmitted from a master apparatus to respective slave apparatuses in a timing-matching manner, data returned from the slave apparatuses to the master apparatus are shifted in timing.

This is explained by referring to the example of the digital exchange network.

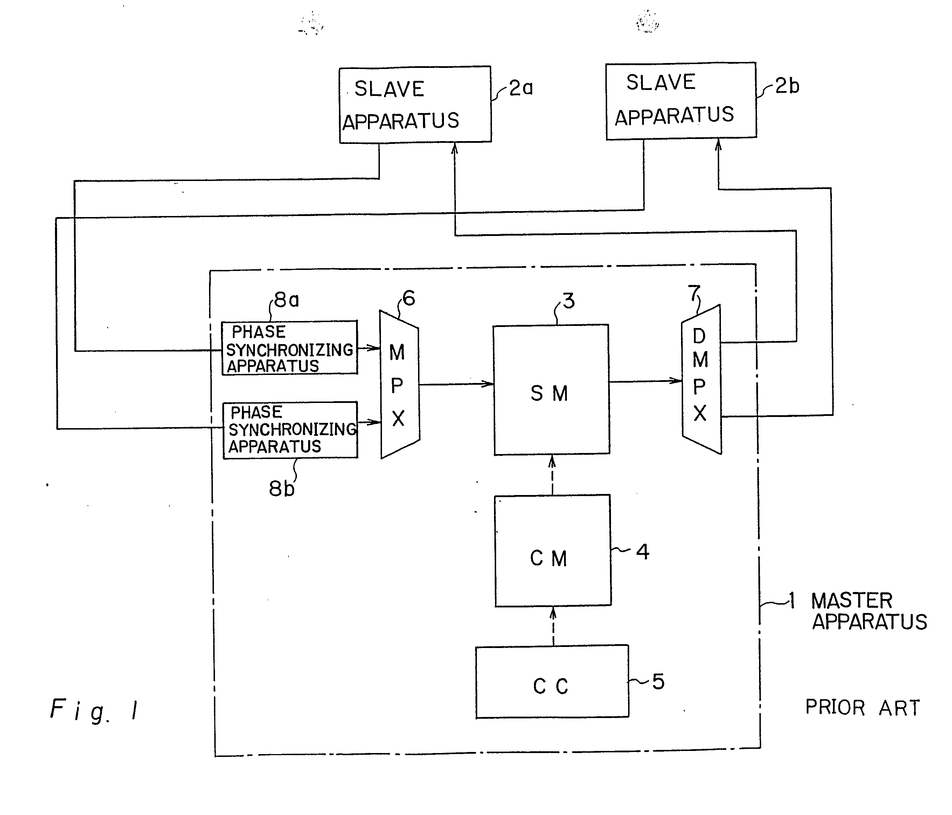

Figure 1 is a block diagram of a conventional digital exchange network.

Master apparatus 1 is a digital exchange and respective time divisional data are inputted from, for example, two slave apparatuses 2a and 2b which pass phase synchronizing apparatuses 8a and 8b, and which are multiplexed by a multiplexer, MPX6. The output of MPX 6 is exchanged by a switching module, SM3, formed by the stage of a time switch. Then the output of the SM3 is distributed by a demultipliexer. DMPX 7, and thereafter outputted to the two slave apparatuses 2a and 2b. Control memory, CM4, in master apparatus 1 controls SM3 and further, CM4 is controlled by a central processing apparatus, CC5.

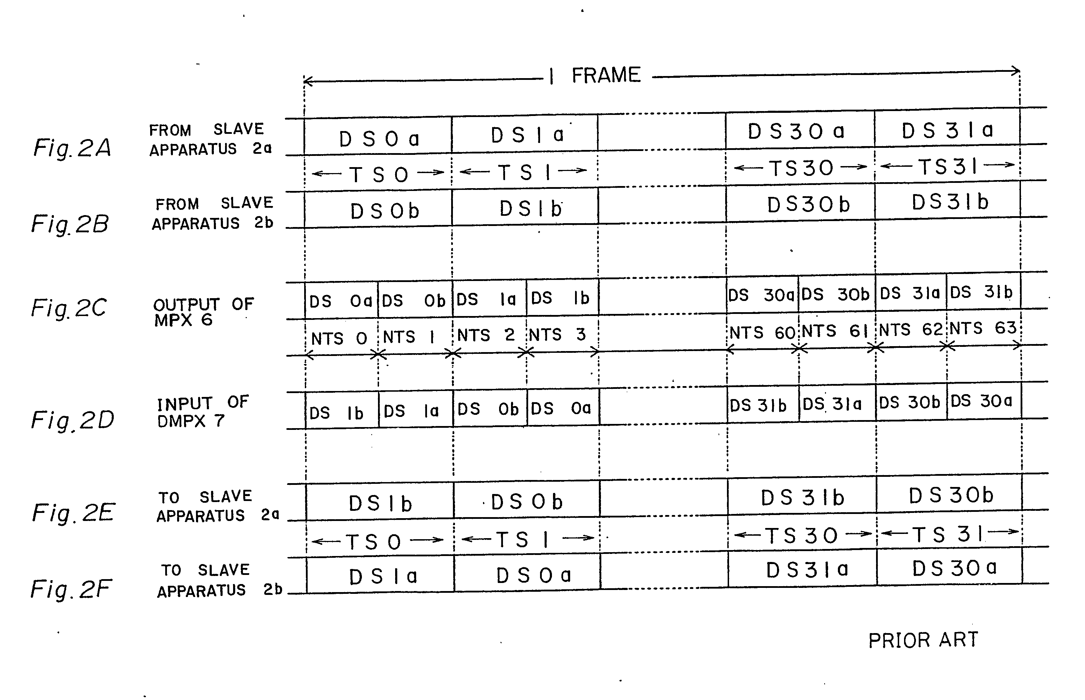

In a digital exchange network of the above structure, it is supposed that a line between master apparatus 1 and slave apparatuses 2a and 2b is subjected to a time divisional control in units of frames comprising 32 time slots of TS0-TS31, as shown in Figures 2A, 2B, 2E and 2F. On the other hand, SM3, for example, in master apparatus 1, is subjected to time divisional control in units of frames comprising 64 time slots of NTS0-NTS63, as shown in Figures 2C and 2D.

In a timing of respective time slots, TS0-TS31, time divisional data DS0a-Ds31a are sequentially inputted to an input stage of MPX6 in Figure 1 through phase synchronizing apparatus 8a when the time divisional data DS0a-DS31a are transmitted from slave apparatus 2a, as shown in Figure 2A. In a timing of respective time slot TS0-TS31, time divisional data DS0b-DS31b are sequentially inputted to an input stage of MPX6, shown in Figure 1, through phase synchronizing apparatus 8b when time divisional data DS0b-DS31b are transmitted from slave apparatus 2b.

MPX6 of Figure 1 multiplexes the above two lines. Then, as shown in Figure 2C, time divisional data DS0a-DS31a from slave apparatus 2a are multiplexed with the even numbered time slots of NTS0-NTS63, which corresponds to the former half portion of respective time slots of TS0-TS31. Similarly, respective time divisional data DS0b-DS31b from slave apparatus 2b are multiplexed with the odd numbered time slots of NTS0-NTS63, which corresponds to the latter half of respective time slots of TS0-TS31. These multiplexed time divisional data are outputted to SM3(Figure 1).

SM3 as shown in Figure 2D, exchanges the content of respective time slots of NTS0-NTS63 and the result is outputted to DMPX7.

DMPX7 distributes time divisional data in the even numbered time slots of NTS0-NTS63 to respective time slots TS0-TS31 of an output line to slave apparatus 2a, as shown in Figure 2E, and distributes time divisional data of the odd numbered time slots of NTS0-NTS63 to respective time slots TS0-TS31 of an output line to slave apparatus 2b, as shown in Figure 2F.

Suppose that time divisional data DS0a, DS1a, DS30a and DS31a from slave apparatus 2a, are exchanged and connected to TS1, TS0, TS31 and TS30 respectively, of an output line to slave apparatus 2b, as shown in Figure 2F. On the other hand, suppose that time divisional data DS0b, DS1b, DS30b and DS31b are exchanged and connected to TS1, TS0, TS31 and TS30 of an output line to slave apparatus 2a, as shown in Figure 2E.

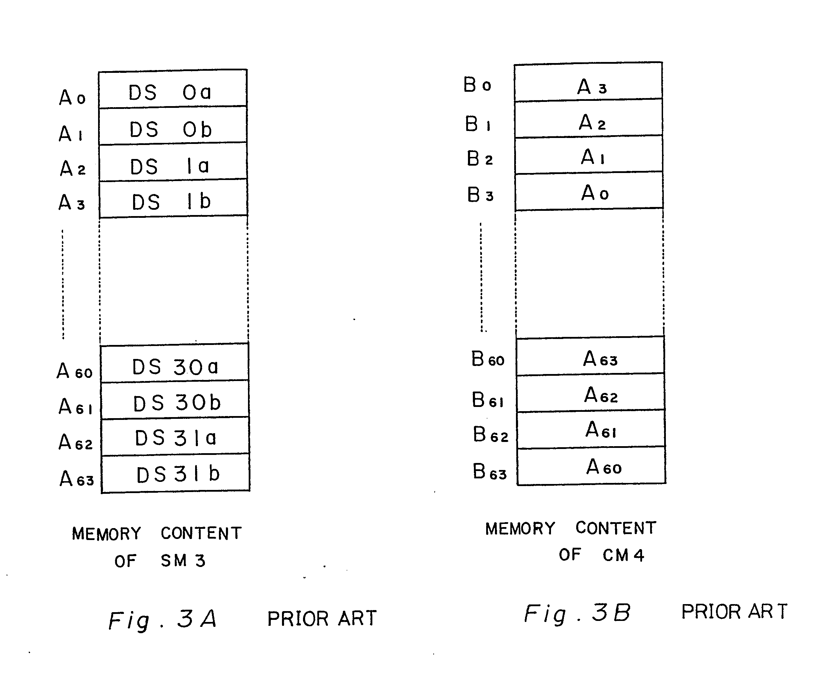

Respective outputs from MPX6 in the above two cases as shown in Figure 2C, are sequentially written into SM3 in Figure 1, namely, into respective addresses $A_0$-$A_{63}$ of SM3, as shown in Figure 3A. These addresses correspond to time slots NTS0-NTS63.

CC5 of master apparatus 1 in Figure 1 enables CM4 to have its respective addresses $B_0$-$B_{63}$ correspond to respective time slots NTS0-NTS63 of an input stage of DMPX7. Respective addresses of SM3 in which time divisional data to be outputted to respective time slots NTS0-NTS63 are stored in respective addresses $B_0$-$B_{63}$ of CM4.

Namely, as shown in Figure 3A, respective time divisional data from slave apparatuses 2a and 2b are alternately and sequentially stored in respective addresses $A_0$-$A_{63}$ of SM3. Thus, in the case of an exchange connection as shown in Figure 2, respective addresses of SM3 are stored in CM4, as shown in Figure 3B. For example, where time divisional data DS0b from slave apparatus 2b is to be multiplexed to TS1 of an output line to slave apparatus 2a as shown in Figure 2E, the time divisional data DS0b is required to be multiplexed with time slot NTS2, as shown in Figure 2D. The time divisional data DS0b from slave apparatus 2b is stored in address $A_1$ corresponding to time slot NTS1 in an output stage of MPX6 in SM 3, as shown in Figures 2C and 3A. Therefore, address $A_1$ of SM3 is stored in address $B_2$ of CM4, corresponding to time slot NTS2 in an input stage of DMPX7.

In this state, CC5 sequentially designates respective addresses $B_0$-$B_{63}$ of CM4 and reads time divisional data by accessing SM3 using the address value of SM3 read out from respective addresses B0-B63 of CM4, and outputs the time divisional data to DMPX7. Namely, by performing a random access to SM3, the time divisional data is read out.

In accordance with the above operation, as shown in Figure 2, respective time divisional data inputted through time slots of an input line from slave apparatuses 2a and 2b are exchanged and connected to discretional time slots of an output line to respective slave apparatuses.

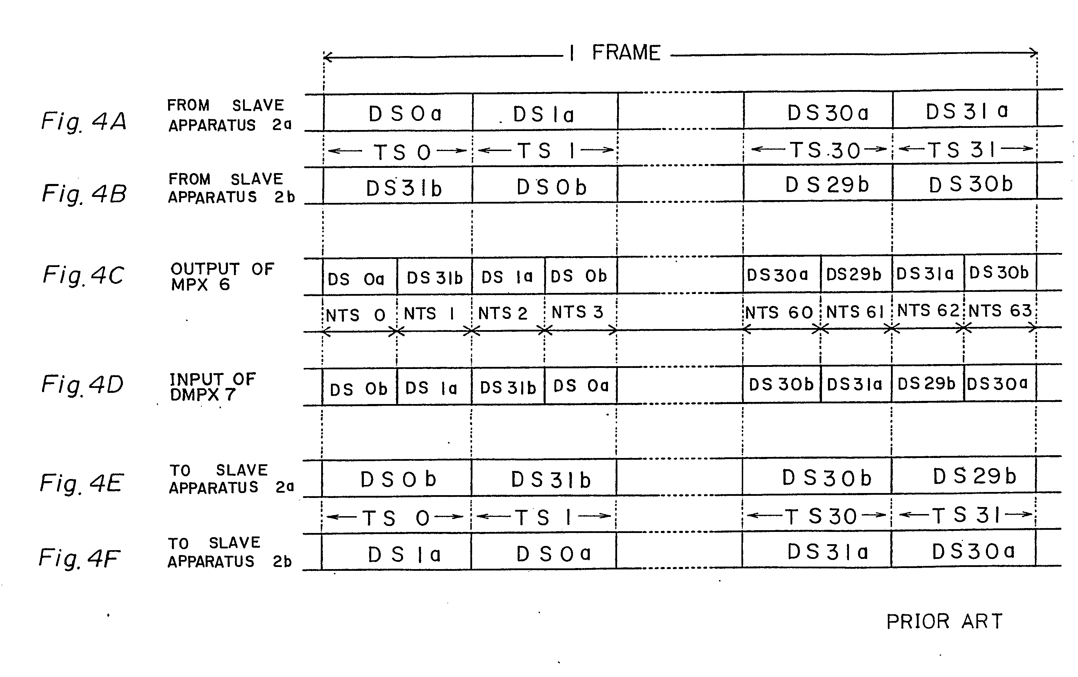

Respective input lines to master apparatus 1 from slave apparatuses 2a and 2b are independently controlled by respective slave apparatuses and the relationship between respective time divisional data from slave apparatuses 2a and 2b are, for example, as shown in Figures 4A and 4B. A relative transmission delay can also be caused where the transmission distance between slave apparatus 2a and master apparatus 1 is greatly different from the transmission distance between slave apparatus 2b and master apparatus 1. In the case shown in Figures 4A and 4B, the phase of time divisional data from slave apparatus 2b is delayed by one time slot as compared with the state shown in Figures 2A and 2B. This phase difference is generally called a bit phase difference.

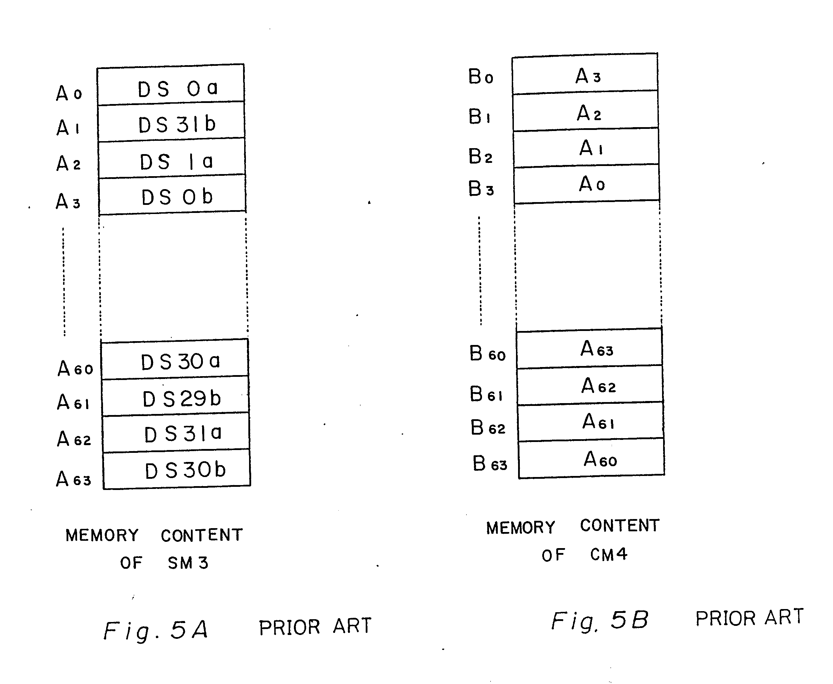

In the above case, the output stage from MPX6 is different from that shown in Figure 2C and becomes as shown in Figure 4C. Therefore, respective time divisional data are stored in SM3 in master apparatus 1 shown in Figure 1, i.e., in the state shown in Figure 5A, which is different from that shown in Figure 3A. If no process is applied to the above bit phase difference, CC5 controls the memory content of CM4 such that it becomes, as shown in Figure 5B, which is identical to that shown in Figure 3B. Then, the time divisional data read out from SM3 and inputted to DMPX7 becomes as shown in Figure 4D, which is different from that shown in Figure 2D. Therefore, exchange connections are applied to respective output lines and to slave apparatuses 2a and 2b, as shown in Figures 4E and 4F. These connections are different from those shown in Figures 2E and 2F.

As stated above, in order to prevent a bit phase difference between time divisional data input from input lines from respective slave apparatuses 2a or 2b and to prevent an erroneous exchange connection in master apparatus 1, phase synchronizing apapratuses 8a and 8b are conventionally provided immediately before an input stage of MPX6, as shown in Figure 1. These apparatuses cancel transmission delays of respective lines in relative manner.

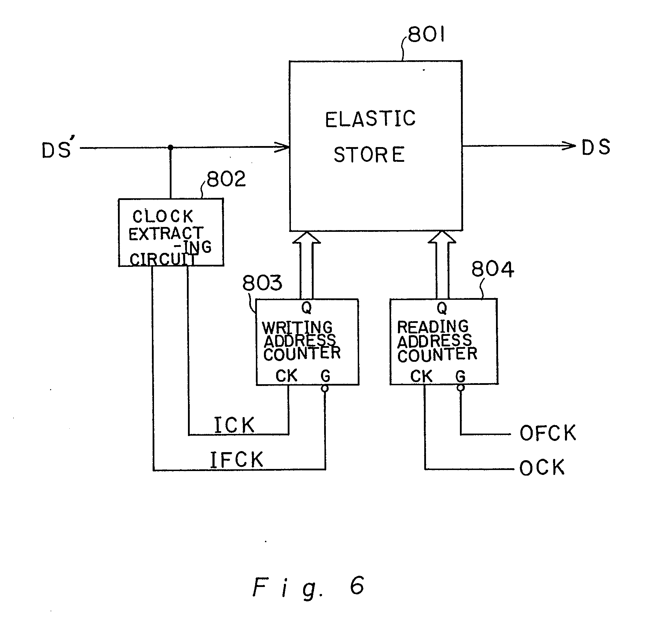

The general structure of phase synchronizing apparatuses 8a and 8b is shown in Figure 6.

Elastic store 801 is a memory, which has a capacity of about 1 frame and simultaneously performs write and read operations. The time divisional data $DS^{'}$ is temporarily held and then outputted as time divisional data DS.

Next, clock extracting apparatus 802 extracts bit clock ICK and frame clock IFCK from time divisional data $DS^{'}$ inputted through an input line from the slave apparatus, where the time divisional data $DS^{'}$ is likely to include a bit phase difference.

Writing address counter 803 produces address data for writing time divisional data $DS^{'}$ in elastic store 801, which is cleared when frame clock IFCK is produced. It thereby outputs a head address, and thereafter produces address data whose values sequentially increase every time bit clock ICK is inputted.

Reading address counter 804 produces address data for reading out time divisional data DS from elastic store 801. Reading address counter 804 is cleared when a basic frame clock OFCK produced from an apparatus not shown within a master apparatus 1 of Figure 1 is produced. It thereby outputs a head address and thereafter produces address data whose values sequentially increase every time the basic bit clock OCK is inputted.

The input time divisional data $DS^{'}$ are written into the predetermined continuous area of elastic store 801 in frame units based on the clock extracted from the time divisional data. Then they are synchronized with the basic clock of master apparatus 1 and finally they are read out as time divisional data DS. Therefore, if the basic clock OCK and basic frame clock OFCK in Figure 6 are commonly determined to be set in resepctive phase synchronizing apparatuses 8a and 8b in Figure 1, the time divisional data maintained in elastic store 801 (Figure 6) of respective apparatuses 8a and 8b are read with the head of the frame of the time divisional data matched between the outputs of respective phase synchronizing apparatuses 8a and 8b. Therefore, the bit phase difference of several bits between lines corresponding to respective slave apapratuses 2a and 2b is absorbed.

However, in the case of the above prior art apparatus, the elastic store is effective in absorbing bit phase differences smaller than about one time slot between respective lines. If the bit phase difference between slave apparatusese becomes larger than one time slot, the elastic buffer needs deeper buffering depth, in accordance with an increase of the buffering depth. Therefore, the hardware load imposed on the elastic store becomes large.

Conventionally, elastic store having a capacity of one frame is needed where the difference of time slots up to one frame is to be absorbed. Namely, if the elastic store has a capacity or depth corresponding to one frame, the difference of the time slots within one frame between the lines can be absorbed, althogh a shift of frames between the lines cannot be absorbed. If the depth of the elastic store can be made equal to the number of the time slot bits constituting one frame, the depth of the elastic store has to be made larger in accordance with an increase in the number of the time slot bits constituting one frame. Therefore, a larage capacity i.e. a large hardware of the elastic store is necessary when the length of one frame is large.

Summary of the Invention

An object of the present invention is to realize an effective correction of bit phase difference without increasing the hardware load.

Where a plurality of slave apparatuses are connected to a master apparatus and a data transmission between the master apparatus and slave apparatuses is conducted, the present invention provides an apparatus for absorbing the bit phase difference between respective data corresponding to respective slave apparatuses. The master apparatus in this case is, for example, an electronic exchange and the slave apparatuses are for example, various terminal apparatuses or remote concentration apparatuses. In this case, a plurality of slave apparatuses are connected to a master apparatus through a plurality of input lines and a plurality of output lines which, for exampie, transmit time divisional data. The master apparatus includes, for example, a memory for exchange. Futhermore, the master apparatus has respective time divisional data inputted through respective input lines from respective slave apparatuses in addresses corresponding to respective input timings of respective time divisional data of a memory. Thereafter, respective time divisional data read out from the memory by controlling the reading addresses and respective time divisional data of the memory are exchanged and connected to respective output lines of respective slave apparatuses.

Next, the master apparatus includes a bit phase difference recognizing unit for recognizing a bit phase difference of respective data corresponding to respective slave apparatuses. The bit phase difference recognizing unit recognizes the bit phase difference of respective time divisional data corresponding to respective slave apparatuses by detecting a timing difference between respective frame clocks by extracting a frame clock from respective time divisional data. The bit phase difference recognizing unit may be constructed to recognize the bit phase difference based on a transmission speed and transmission distance between the master apparatus and respective slave apparatuses.

The main apparatus has a bit phase difference correcting unit for correcting the bit phase difference of respective data corresponding to respective slave apparatuses based on the recognition result in the bit phase difference recognition unit. The bit phase difference correcting unit corrects ·the bit phase difference of respective time divisional data by correcting the reading address when the master apparatus reads respective time divisional data from the memory, based on the recognition result in the bit phase difference recognition unit.

If the above process is conducted in the main master apparatus, the bit phase difference correcting unit directly corrects. The correction is based on the recognition result of the bit phase difference of data corresponding to respective slave apparatuses in the bit phase difference recognition apparatus unit.

Therefore, a special buffer for correcting the bit phase difference is not necessary and the present invention can be flexibly adapted for the case where the bit phase difference changes.

Brief Description of the Drawings

Other objects and features of the present invention will be easily understood by persons skilled in the art based on the description of the preferred embodiment of the present invention, together with the attached drawings. In the drawings;

Figure 1 is a block diagram of a prior art digital exchange network,

Figures 2A to 2F represent views of an example of a timing chart of an operation where a bit phase difference does not exist,

Figures 3A and 3B explain an operation where a bit phase difference does not exist,

Figures 4A to 4F show an operation timing chart where a bit phase difference exists but is not corrected,

Figures 5A and 5B are views for explaining problems caused where the bit phase difference exists but is not corrected,

Figure 6 is a structural view of a phase synchronizing apparatus,

Figure 7 is a block diagram of an embodiment of the present invention,

Figures 8A to 8F are views of an operational timing chart of the present invention shown in Figure 7, and

Figures 9A and 9B are views for explaining an operation of the present invention.

Description of the preferred Embodiment

The preferred embodiment of the present invention will be explained by referring to the drawings.

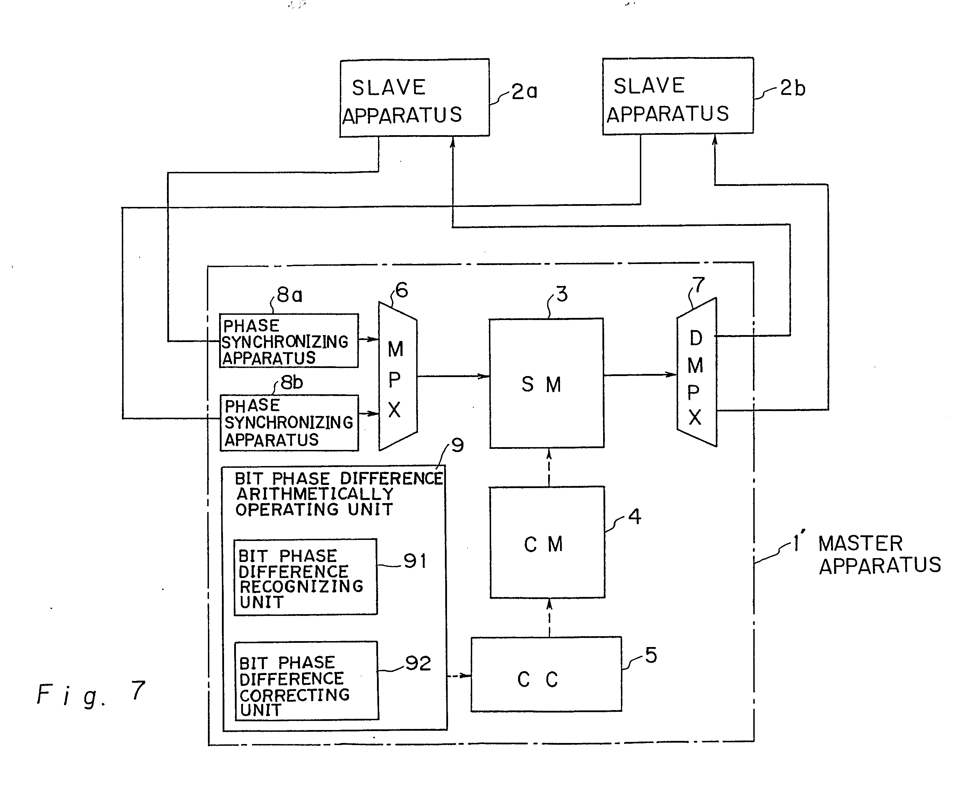

Figure 7 is a structural view of an embodiment of the present invention.

Master apparatus 1′ is a digital exchange and respective time divisional data are inputted from, for example, two slave apparatuses 2a and 2b via phase synchronizing apparatuses 8a and 8b, which are multiplexed by a multiplexer, MPX6. The output of MPX 6 is exchanged by a switching module, SM3, formed by a stage of a time switch. Then the output of SM3 is distributed by a demultipliexer, DMPX 7 and thereafter outputted to the two slave apparatuses 2a and 2b. Control memory, CM 4, in master apparatus 1′ controls SM3 and further, CM 4 is controlled by a central processing apparatus, CC 5.

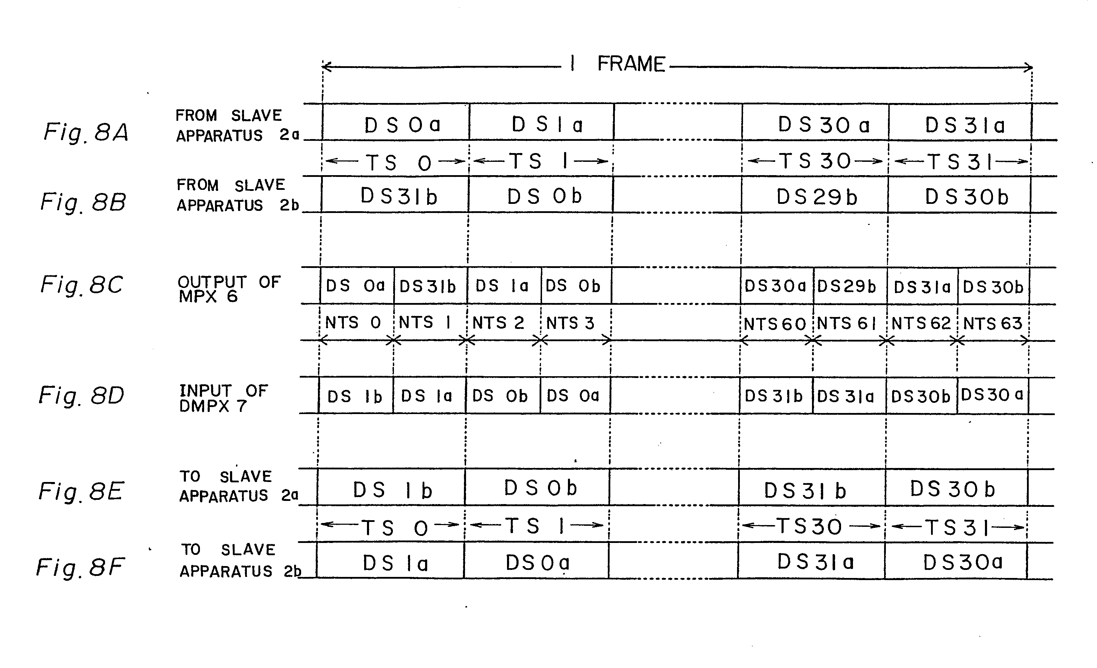

In a digital exchange network with the above structure, it is supposed that a line between master apparatus 1′ and slave apparatuses 2a and 2b is subjected to a time divisional control in units of frames comprising 32 time slots of TS0-TS31, as shown in Figures 8A, 8B, 8E and 8F. On the other hand, SM3, for example, in master apparatus 1′, is subjected to time divisional control in units of frames comprising 64 time slots of NTS0-NTS63, as shown in Figures 8C and 8D.

In a timing of respective time slots, TS0-TS31, time divisional data DS0a-DS31a are sequentially inputted to an input stage of MPX6 in Figure 7 through phase synchronizing apparatus 8a when the time divisional data DS0a-DS31a are transmitted from slave apparatus 2a, as shown in Figure 8A. During respective time slots TS0-TS31, time divisional data DS0b-DS31b are sequentially inputted to an input stage of MPX6 through phase synchronizing apparatus 8b when time divisional data DS0b-DS31b are transmitted from slave apparatus 2b.

MPX6 multiplexes the above two iines. Then, as shown in Figure 8C, time divisional data DS0a-DS31a from slave apparatus 2a are multiplexed with the even numbered time slots of NTS0-NTS63. This corresponds to the former half portion of respective time slots of TS0-TS31. Similarly, respective time divisional data DS0b-DS31b from slave apparatus 2b are multiplexed with the odd numbered time slots of NTS0-NTS63. This corresponds to the latter half of respective time slots of TS0-TS31. These multiplexed time divisional data are outputted to SM3(Figure 7).

SM3, shown in Figure 8D, exchanges the content of respective time slots of NTSU-NTS63 and the result is outputted to DMPX7.

DMPX7 distributes time divisional data in the even numbered time slots of NTS0-NTS63 to respective time slots TS0-TS31 of an output iine and to slave apparatus 2a, as shown in Figure 8E. It also distributes time divisional data of the odd numbered time slots of NTS0-NTS63 to respective time slots TS0- TS31 of an output line to slave apparatus 2b, as shown in Figure 8F.

The present embodiment also has phase synchronizing apparatuses 8a and 8b as in the prior art shown in Figure 1 and as referred to in Figure 6. These apparatuses are for absorbing a small bit phase difference of less than one time slot between the lines, as already explained above. Therefore, the depth of the buffering in an elastic store (Figure 6) may be made shallow, thereby suppressing the buffer load to a minimum.

This embodiment is different from the prior art shown in Figure 1 in that bit phase difference arithmetically operating unit 9 for controlling CC5 within master apparatus 1′ is provided. This unit comprises bit phase difference recognizing unit 91 and bit phase difference correcting unit 92. Bit phase difference recognizing unit 91 performs an arithmetic operation of a transmission delay, namely, the bit phase difference between input lines from respective slave apparatuses 2a and 2b. Bit phase difference correcting unit 92 performs arithmetic operation of an amount of the address correction, the address being used when CC5 controls CM4, thereby correcting the bit phase difference. The following 3 types of apparatus can be used as arithmetic operating unit 9.

① An apparatus for maintaining a bit phase difference between respective lines as station data beforehand and performing an arithmetic operation of the amount of the address correction in accordance with the data.

② An apparatus for setting a bit phase difference between respetive lines as a manufacturing note using hardware, or reading the set value of respective phase differences of the manufacturing note when the system starts up, and for performing an arithmetic operation of the amount of the address correction in accordance with the read data. The manufacturing note is provided by setting a lip switch in accordance with the bit phase difference between respective lines.

③ An apparatus for detecting a bit phase difference between respective lines using a hardware and for performing an arithmetic operation of the amount of the address correction in accordance with the detecting data.

Apparatuses ① and ② described above can be applied where the bit phase difference of the respective lines can be previously recognized, namely, where the bit phase difference is caused by the difference between the distances of respective lines corresponding to respective slave apparatuses 2a and 2b of Figure 7 Apparatuses ③ described above can be used where the bit phase difference of respective lines cannot be calculated beforehand, namely, where the time division timings of respective lines is governed and controlled by respective slave apparatuses 2a and 2b. Therefore, in an actual case, apparatuses ① or ② may preferably be combined with apparatus ③.

The portion for detecting the bit phase difference between respective lines in bit phase difference arithmetically operating unit 9 corresponding to apparatus ③ can be realized in an apparatus which comprises a circuit for extracting a frame clock for divided portions of a frame, i.e., a variation point of the time slot of time divisional data, and a circuit for counting a shift in phase of the clock. The frame clock extracting circuit is generally known as a structure of an electronic exchange apparatus. The counting circuit can be realized by, for example, a counter for counting an interval between a basic frame clock of the master apparatus and an extracted frame clock in units of time slots.

An operation of the present invention of the above structure will now be explained. Suppose that a relation between respective time divisional data from slave apparatuses 2a and 2b becomes as shown in Figures 8A and 8B, as in the case of the prior art shown in Figures 4A and 4B. In the case of Figures 8A and 8B, the phase of the time divisional data from slave apparatus 2b is delayed by one time slot as compared with the stage shown in Figures 2A and 2B.

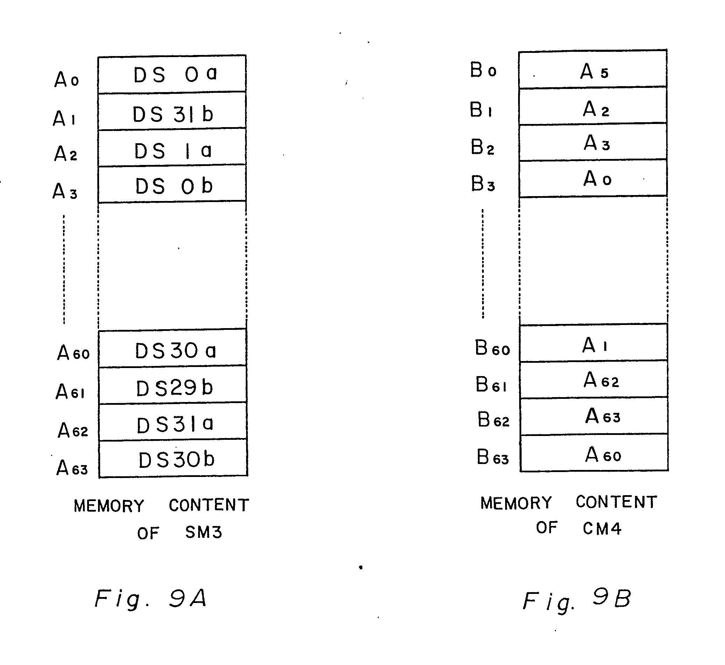

In this case, the state of the output stage of MPX6 becomes as shown in Figure 8C which is different from the case shown in Figure 2C. Therefore, respective time divisional data are stored in SM3 in the manner shown in Figure 9A, which is different from the manner shown in Figure 3A. This state is the same as shown in Figure 4C and Figure 5A.

In contrast, CC5 forms a control under the assumption that a bit phase difference does not exist in respective time divisional data. Thus, CC5 recognizes that a storing operation of SM3 is conducted as shown in Figure 3A. Therefore, when CC5 determines an address of SM3 at respective addresses of CM4, the addresses are determined based on the assumption that a bit phase difference does not exist in respective input time divisional data.

Bit phase difference arithmetically operating unit 9 in main apparatus 1 in Figure 7 sequentially performs an arithmetic operation of a bit difference sequentially in respective input lines (the input stages of MPX6 in Figure 7) from slave apparatuses 2a and 2b. Therefore, the bit phase difference of one time slot of the time divisional data in the input line from slave apparatus 2b in Figure 8B is detected.

Bit phase difference arithmetic operating unit 9 corrects the address values of SM3 which are determined for respective addresses of CM4 by CC5, based on the following arithmetic operation and writes the corrected address values in the corresponding addresses in CM4.

First, when CC5 sets an even numbered address value $A_{2n}(0 \leq n \leq 31)$ of SM3, the time divisional data corresponding to the slave apparatus 2a is stored in address $A_{2n}$ in SM3. Bit phase difference arithmetic operating unit 9 corrects the above address value $A_{2n}$ to the address Ax whose address number is the value x obtained by the following equation (1).

$$x = MOD [ \{2n + d_a \times r + 1\}, 64] - 1 \qquad (1)$$

On the other hand, where CC5 sets an odd numbered address value $A_{2n+1}$ $(0 \leq n \leq 31)$ of SM3, the time divisional data corresponding to slave apparatus 2b is stored in address $A_{2n+1}$ of SM3. Bit phase difference arithmetic operating unit 9 corrects the above address value $A_{2n+1}$ to the address value Ay, whose address number is the value y calculated by the following equation (2).

$$y = MOD [ \{(2n + 1) + d_b \times r + 1\}, 64] - 1 \qquad (2)$$

In case of y = -1, y should be corrected to y = 63. In the above equations (1) and (2), da and db are the values obtained by converting the bit phase difference (delay amount) detected in respective input lines from respective slave apapratuses 2a and 2b to the number of time slots. In Figures 8A and 8B, da = 0 and db = 1. Further, r is the multiplexing ratio in MPX6 in Figure 7. In accordance with the relation of Figures 8B and 8C, the number of time slots in the output side of MPX6 is 64 including time slots NTS0-NTS63. This is twice the number of time slots TS0-TS31 in the input side. Thus, r = 2. MOD [A, B] is an arithmetic operation for performing a calculation to obtain a remainder when an integer A is divided by an integer B.

As an example, in a manner similar to that shown Figure 2, time divisional data DS0a, DS1a, DS30a and DS31a from slave apparatus 2a are exchanged to be connected to TS1, TS0, TS31 and TS30 of the output line to slave apparatus 2b, as shown in Figure 8F. On the other hand, respective time divisional data DS0b, DS1b, DS30b and DS31b may be exchanged to be connected to TS1, TS0, TS31 and TS30 of the output line to slave apparatus 2a, as shown in Figure 8E. This is considered as one example for use in an explanation.

Respective outputs from MPX6 in Figure 8C are sequentially written in SM3 of Figure 7. That is, respective outputs are sequentially written in respective addresses $A_0$-$A_{63}$ in SM3, which correspond to time slots NTS0-NTS63.

In contrast, CC5 performs control based on the assumption that a bit phase difference does not exist. It therefore recognizes that the storing operation shown in Figure 3A is conducted in SM3. Therefore, CC5 performs the following operation, where time divisional data DS0b from slave apparatus 2b is multiplexed with time slot TS1 of an output line to slave apparatus 2a. Namely, at first, CC5 recognizes that time divisional data DS0b from slave apparatus 2b is stored in address $A_1$ of SM3 which corresponds to time slot NTS1, in the output stage of MPX6, as shown in Figure 3A. CC5 recognizes that DMPX7 distributes data of time slot NTS2 to time slot TS1 of an output line to slave apparatus 2a, as shown in Figures 8D and 8E. Accordingly, CC5 sets address $A_1$ of SM3 on address $B_2$ in CM4, which corresponds to time slot NTS2, in an input stage of DMPX7.

With regard to the above setting, bit phase difference arithmetic operating unit 9 in master apparatus 1' in Figure 7 corrects the address value to be written in address $B_2$ of CM4 as shown below and writes the corrected value into address $B_2$.

The address number of address value $A_1$ is 1 and an odd number, and thus bit phase difference arithmetic operating unit 9 supplied the equation (2) to calculate the correction value x. Namely, where in the above equation (2), 2n + 1 = 1, $d_b$ = 1, r = 2, the above equation is expresses as follows.

$$y = MOD [ \{1 + 1 \times 2 + 1\} , 64 ] - 1 = 3$$

Thereby, address value $A_3$ having address number 3 can be obtained. Therefore, bit phase difference arithmetically operating unit 9 stores address value $A_3$ as shown in Figure 9B, in address B2 of CM4 through CC5.

With regard to addresses $B_0$, $B_{60}$ and $B_{62}$ of CM4, CC5 sets respective addresses $A_3$, $A_{63}$ and $A_{61}$ of SM3 (as shown in Figure 3B) and then, bit phase difference arithmetic operation unit 9 corrects the respective address values to $A_5$, $A_1$ and $A_{63}$ based on the above equation (2) and writes the corrected address values into respective addresses in CM4.

On the other hand, delay is not caused in an input line from slave apparatus 2a, that is, $d_a$ = 0 in equation (1). Therefore, after CC5 designates an even address on SM3 which corresponds to slave appartus 2a, even if bit phase difference arithmetic operation 9 corrects the respective address value in accordance with equation (1), the address value is not changed. Therefore, in Figure 9, the value stored in respective addresses $B_1$, $B_3$, $B_{61}$ and $B_{63}$ of CM4 are the same as in the case where the bit phase difference shown in Figure 3B does not exist.

As stated above, bit phase difference arithmetically operating unit 9 corrects the address value set on CM4 by CC5 by the amount corresponding to the bit phase difference caused by respective lines.

Conceptually, one address of SM3 and CM4 corresponds to one time slot in an output stage of MPX6 or in an input stage of DMPX7. Thus, equations (1) and (2) correct the bit phase difference by one address if the bit phase difference is one time slot. In this case, the number of time slots used in the exchange connection process between the output stage of MPX6 and input stage of DMPX7 is repeated in units of 64 time slots in the manner NTS0, NTS1....NTS63, and NTS0, NTS1... Therefore, in the correction process of the above address, the address number corresponding to the time slot is repeated in units of 64 addresses. This process is realized by a MOD operation in equations (1) or (2). For example, if the value is [2n + da x r + 1] the equation (1) becomes "65", and an address number of more than "63" does not exist (which should be referred to Figure 9A) and the correction value x becomes "1" in accordance with the MOD operation shown in equation (1).

As shown above, even if a bit phase difference occurs in the input line from slave apparatuses 2a and 2b, the bit phase difference is corrected by bit phase difference arithmetic operating unit 9 in master apparatus 1' shown in Figure 7. Therefore, the same exchange connection as in the case where the bit phase difference does not exist, as shown in Figures 2A to 2F, can be realized as shown in Figures 8A to 8F.

A bit phase difference of less than one time slot is absorbed by phase synchronizing apparatuses 8a and 8b in the same manner as in the prior art shown in Figure 1, as explained above.

According to the embodiment of the present invention, the elastic store having a depth of only several time slot bits may be used to match a variation point (namely, divided points of one frame,) of data transmitted from slave apparatus 2a to that of data transmitted from slave apparatus 2b, thereby correcting a bit phase difference within one time slot. Then, a bit phase difference more than one time slot can be absorbed by performing the address conversion using algorithm shown in the above equations (1) and (2). Therefore, the invention can decrease a capacity of the elastic store to a minimum as described above.

The number of slave apparatuses 2a and 2b is not limited to two, and a plurality of slave apparatuses may be handled in the same manner. Generally speaking, if p slave apparatuses are provided, respective lines from respective slave apparatuses are time divisionally controlled in units of frames comprising q time slots. On the other hands SM3 of main apparatus $1'$ is time divisionally controlled in units of frames comprising q × p time slots. Then, if a delay is not caused on respective lines from respective slave apparatuses, time divisional data corresponding to respective p slave apparatuses are maintained on respective addresses $A_{pn}$, $A_{pn+1}$, .... $A_{pn+p-1}$ ($0 \leq n \leq q-1$) on SM3. Then, where CC5 sets respective address values $A_{pn}$, $A_{pn+1}$, ... $A_{pn+p-1}$ on the respective addresses of CM4, bit phase difference arithmetic operating unit 9 in Figure 7 may correct them to respective address values $A_{z0}$ to $A_{zp-1}$ whose address number are the values $z_0$ to $z_{p-1}$ calculated by the following equation.

$$Z_0 = MOD [ \{ pn + d_0 \times r + 1 \}, q \times p] - 1$$
$$Z_1 = MOD [ \{ (pn+1) + d_1 \times r + 1 \}, q \times p] - 1$$
.
.
.
$$Z_{p-2} = MOD [ \{ (pn+p-2) + d_{p-2} \times r + 1 \}, q \times p] - 1$$
$$Z_{p-1} = MOD [ \{ (pn+p-1) + d_{p-1} \times r + 1 \}, q \times p] - 1$$

Where, $z_{p-1} = -1$, it is corrected to $z_{p-1} = q \times (p-1)$.

In this embodiment, as shown above, the time divisional data input is sequentially written in a continuous addresses of SM3, as shown in Figure 9. The time divisional data written in the discretional addresses can be read at random in accordance with the content of CM4 and then outputted. Conversely, input time divisional data may be randomly written and then sequentially read out to be outputted. In this case, the address designation when time divisional data is written at random may be corrected.

The above embodiment shows an example in which bit phase difference arithmetic operating unit 9 corrects the processes in SM3 and CM4 in a digital exchange. However, the bit phase differences may also be corrected for various other data processes in master apparatus $1'$.

It is also possible to apply the present invention to data processing apparatuses other than the digital exchange apparatus.

As explained above, when the master apparatus performs data processing relating to the slave apparatuses, the bit phase difference is directly corrected and thus a special buffer for correcting the bit phase differences is not necessary. Therefore, the hardware load can be minimized and the present invention can be adapted for the case where the bit phase difference changes. In particular, when the bit phase difference increases, an increase in the hardware can be avoided. This enables a low cost system to be realized, comprising a master apparatus and a plurality of slave appratuses.

## Claims

1. A bit phase difference absorbing apparatus for absorbing bit phase differences between respective data corresponding to respective slave apparatuses where a master apparatus is connected to a plurality of said slave apparatuses and data transmission is conducted between said master apparatus and said respective slave apparatuses, comprising:
a bit phase difference recognizing means provided within said master apparatus for recognizing bit phase differences between said respective data corresponding to said respective slave apparatuses and,
a bit phase difference correcting means provided within said master apparatus for correcting bit phase differences between said respective data in said respective data processes corresponding to said respective slave apparatuses, based on the recognition result by said bit phase difference recognizing means.

2. A bit phase difference absorbing apparatus for absorbing bit phase differences between respective time divisional data corresponding to respective slave apparatuses where a pluraiity of said slave apparatuses are connected to a master apparatus through a plurality of lines for transmitting time divisional data and where said time divisional data is transmitted between said master apparatus and said respective slave apparatuses, comprising:
a bit phase difference recognizing means provided within said master apparatus for recognizing bit phase differences between said respective time divisional data corresponding to said respective slave apparatuses; and

a bit phase difference correcting means provided within said master apparatus for correcting bit phase differences between said respective time divisional data corresponding to said respective slave apparatuses based on the recognition result of said bit phase difference recognition means.

3. A bit phase difference absorbing apparatus for absorbing bit phase differences between respective time divisional data corresponding to respective slave apparatuses where a plurality of slave apparatuses are connected to a master apparatus through a plurality of input lines and a plurality of output lines for transmitting time divisional data and where said master apparatus performs an exchange connection of said respective time divisional data through respective input lines from respective slave apparatuses with respective output lines to respective slave apparatuses, comprising:

a bit phase difference recognizing means provided within said master apparatus for recognizing bit phase differences between respective time divisional data input through said input lines from said resepctive slave apparatuses; and

a bit phase difference correcting means provided within said master apparatus for correcting bit phase differences between said respective time divisional data in an exchange connection process of said respective time divisional data in said master apparatus, based on the recognition result by said bit phase difference recognizing means.

4. The bit phase difference absorbing apparatus according to claim 3, wherein

said main apparatus includes a memory for exchange which stores respective time divisional data input through said respective input lines from respective slave apparatuses in the addresses corresponding to the respective input timings of said time divisional data in said memory and thereafter reads said respective time divisional data by controlling a reading address of said memory, thereby performing an exchange connection of said respective time divisional data to respective output lines for said respective slave apparatuses, and

said bit phase difference correcting means corrects a reading address when said master apparatus reads respective time divisional data from said memory, based on the recognition result by said bit phase difference recognizing means.

5. The bit phase difference absorbing apparatus according to claim 4, wherein

said bit phase difference recognizing means obtains the bit phase difference between respective time divisional data corresponding to respective slave appratuses by extracting a frame clock from respective time divisional data and detecting a timing difference between respective frame clocks.

Fig. 1

PRIOR ART

EP 0 374 843 A2

Fig.2A — FROM SLAVE APPARATUS 2a

Fig.2B — FROM SLAVE APPARATUS 2b

Fig.2C — OUTPUT OF MPX 6

Fig.2D — INPUT OF DMPX 7

Fig.2E — TO SLAVE APPARATUS 2a

Fig.2F — TO SLAVE APPARATUS 2b

PRIOR ART

EP 0 374 843 A2

| | |
|---|---|
| $A_0$ | DS 0a |
| $A_1$ | DS 0b |
| $A_2$ | DS 1a |
| $A_3$ | DS 1b |
| | |
| $A_{60}$ | DS 30a |
| $A_{61}$ | DS 30b |
| $A_{62}$ | DS 31a |
| $A_{63}$ | DS 31b |

MEMORY CONTENT

OF SM 3

*Fig . 3A*     PRIOR ART

| | |
|---|---|
| $B_0$ | $A_3$ |
| $B_1$ | $A_2$ |
| $B_2$ | $A_1$ |
| $B_3$ | $A_0$ |
| | |
| $B_{60}$ | $A_{63}$ |
| $B_{61}$ | $A_{62}$ |
| $B_{62}$ | $A_{61}$ |
| $B_{63}$ | $A_{60}$ |

MEMORY CONTENT

OF CM 4

*Fig . 3B*     PRIOR ART

EP 0 374 843 A2

I FRAME

| | | TS 0 | TS 1 | | TS 30 | TS 31 |
|---|---|---|---|---|---|---|
| Fig. 4A | FROM SLAVE APPARATUS 2a | DS 0a | DS 1a | | DS 30a | DS 31a |
| Fig. 4B | FROM SLAVE APPARATUS 2b | DS 31b | DS 0b | | DS 29b | DS 30b |

| | | NTS 0 | NTS 1 | NTS 2 | NTS 3 | | NTS 60 | NTS 61 | NTS 62 | NTS 63 |
|---|---|---|---|---|---|---|---|---|---|---|
| Fig. 4C | OUTPUT OF MPX 6 | DS 0a | DS 31b | DS 1a | DS 0b | | DS 30a | DS 29b | DS 31a | DS 30b |
| Fig. 4D | INPUT OF DMPX 7 | DS 0b | DS 1a | DS 31b | DS 0a | | DS 30b | DS 31a | DS 29b | DS 30a |

| | | TS 0 | TS 1 | | TS 30 | TS 31 |
|---|---|---|---|---|---|---|
| Fig. 4E | TO SLAVE APPARATUS 2a | DS 0b | DS 31b | | DS 30b | DS 29b |
| Fig. 4F | TO SLAVE APPARATUS 2b | DS 1a | DS 0a | | DS 31a | DS 30a |

PRIOR ART

EP 0 374 843 A2

|     | MEMORY CONTENT OF SM 3 |
|-----|------------------------|
| $A_0$ | DS 0a |
| $A_1$ | DS 31b |
| $A_2$ | DS 1a |
| $A_3$ | DS 0b |
| ⋮ | ⋮ |
| $A_{60}$ | DS 30a |
| $A_{61}$ | DS 29b |
| $A_{62}$ | DS 31a |
| $A_{63}$ | DS 30b |

MEMORY CONTENT

OF SM 3

*Fig. 5A*    PRIOR ART

|     | MEMORY CONTENT OF CM 4 |
|-----|------------------------|
| $B_0$ | $A_3$ |
| $B_1$ | $A_2$ |
| $B_2$ | $A_1$ |
| $B_3$ | $A_0$ |
| ⋮ | ⋮ |
| $B_{60}$ | $A_{63}$ |
| $B_{61}$ | $A_{62}$ |
| $B_{62}$ | $A_{61}$ |
| $B_{63}$ | $A_{60}$ |

MEMORY CONTENT

OF CM4

*Fig. 5B*    PRIOR ART

EP 0 374 843 A2

F i g. 6

Fig. 7

EP 0 374 843 A2

EP 0 374 843 A2

|  |  | ←———————————— 1 FRAME ————————————→ |
| --- | --- | --- |

**Fig. 8A** — FROM SLAVE APPARATUS 2a

| DS 0a | DS 1a | | DS 30a | DS 31a |
| --- | --- | --- | --- | --- |
| ←TS 0→ | ←TS 1→ | | ←TS 30→ | ←TS 31→ |

**Fig. 8B** — FROM SLAVE APPARATUS 2b

| DS 31b | DS 0b | | DS 29b | DS 30b |
| --- | --- | --- | --- | --- |

**Fig. 8C** — OUTPUT OF MPX 6

| DS 0a | DS 31b | DS 1a | DS 0b | | DS 30a | DS 29b | DS 31a | DS 30b |
| --- | --- | --- | --- | --- | --- | --- | --- | --- |
| NTS 0 | NTS 1 | NTS 2 | NTS 3 | | NTS 60 | NTS 61 | NTS 62 | NTS 63 |

**Fig. 8D** — INPUT OF DMPX 7

| DS 1b | DS 1a | DS 0b | DS 0a | | DS 31b | DS 31a | DS 30b | DS 30a |
| --- | --- | --- | --- | --- | --- | --- | --- | --- |

**Fig. 8E** — TO SLAVE APPARATUS 2a

| DS 1b | DS 0b | | DS 31b | DS 30b |
| --- | --- | --- | --- | --- |
| ←TS 0→ | ←TS 1→ | | ←TS 30→ | ←TS 31→ |

**Fig. 8F** — TO SLAVE APPARATUS 2b

| DS 1a | DS 0a | | DS 31a | DS 30a |
| --- | --- | --- | --- | --- |

Fig. 9B

MEMORY CONTENT OF CM4

| $B_0$ | $A_5$ |
| $B_1$ | $A_2$ |
| $B_2$ | $A_3$ |
| $B_3$ | $A_0$ |
| ... | ... |
| $B_{60}$ | $A_1$ |
| $B_{61}$ | $A_{62}$ |
| $B_{62}$ | $A_{63}$ |
| $B_{63}$ | $A_{60}$ |

Fig. 9A

MEMORY CONTENT OF SM3

| $A_0$ | DS 0a |
| $A_1$ | DS 31b |
| $A_2$ | DS 1a |
| $A_3$ | DS 0b |
| ... | ... |
| $A_{60}$ | DS 30a |
| $A_{61}$ | DS 29b |
| $A_{62}$ | DS 31a |
| $A_{63}$ | DS 30b |